# EUROPÄISCHE PATENTSCHRIFT

(11) **EP 3 305 027 B1**
(45) Veröffentlichungstag und Bekanntmachung des Hinweises auf die Patenterteilung: **14.07.2021**
(21) Anmeldenummer: 16728603.8
(22) Anmeldetag: 31.05.2016
(51) Int. Cl.: H05B 45/38, H05B 45/395

(54) **FAHRZEUGSCHEINWERFER**
VEHICLE HEAD LIGHT
PROJECTEUR DE VÉHICULE

(30) Priorität: 01.06.2015 AT 504442015
(43) Veröffentlichungstag der Anmeldung: 11.04.2018
(73) Patentinhaber: ZKW Group GmbH, 3250 Wieselburg (AT)
(72) Erfinder: WEBER, Emanuel, 2500 Baden (AT)
(74) Vertreter: Patentanwaltskanzlei Matschnig & Forsthuber OG
(86) Internationale Anmeldenummer: PCT/AT2016/050169
(87) Internationale Veröffentlichungsnummer: WO 2016/191783

(56) Entgegenhaltungen:
- EP-A1- 2 670 218
- EP-A1- 2 797 386
- WO-A1-2014/087874
- WO-A1-2014/121315
- AT-A2- 513 916
- US-A1- 2013 207 559

## Beschreibung

Die Erfindung bezieht auf einen Fahrzeugscheinwerfer mit einer Laserlichtquelle, die zumindest einen Laserdiodenzweig mit zumindest einer modulierten Laserdiode aufweist, wobei der Laserstrahl der zumindest einer Laserdiode mittels eines Lichtscanners scannend auf ein Lichtkonversionsmittel lenkbar ist, um an diesem ein Leuchtbild zu erzeugen, welches über ein Abbildungssystem als Lichtbild auf die Fahrbahn projiziert wird, sowie mit einer Laserdiodenansteuerung und einer dieser zugeordneten Recheneinheit, welcher Sensorsignale zugeführt werden und welche ein Modulationssignal für die Laserdiodenansteuerung liefert, und mit einer geregelten Stromversorgung für die Laserdiodenansteuerung.

Das Aufkommen von Lichtsystemen basierend auf Laserdioden im Bereich von Kraftfahrzeugen verlangt nach immer höheren Modulationsgeschwindigkeiten des Diodenstroms, wobei für diese Modulation eine hochfrequente Regelung bzw. Steuerung bereitgestellt werden muss. Übliche, zur LED Ansteuerung verwendete DC-DC Wandler sind bei Modulationsfrequenzen im MHz-Bereich nicht mehr einsatzfähig, sodass für Anwendungen bei so hohen Schaltfrequenzen eine besondere, schnelle Strom-Regelung bzw. -Steuerung vorgesehen werden muss. Eine mögliche Ausführung stellt ein vorgeschalteter "langsamer" DC-DC Wandler (z. B. Boost) mit einer nachfolgenden analog arbeitenden Linearstufe dar. Eine solche nachgeschaltete Linearstufe führt jedoch zu einer ungleichmäßigen Belastung des DC-DC Wandlers und zu einer permanenten Verlustleistung.

Das Dokument EP 2 670 218 A1 beschreibt eine Ansteuerung für LEDs eines Scheinwerfers, doch handelt es sich nicht um ein scannendes System der hier gegenständlichen Art, bei welchem ein modulierter Laserstrahl mittels eines Lichtscanners auf ein Lichtkonversionsmittel gelenkt wird, um dort ein Leuchtbild zu erzeugen, das als Lichtbild auf die Fahrbahn projiziert wird.

Das Dokument AT 513 916 A2 zeigt einen Scheinwerfer auf Basis einer modulierten Laserlichtquelle mit einem scannenden Laserstrahl zum Erzeugen eines Leuchtbildes auf einem Lichtkonversionsmittel, wobei die Ansteuerung mehrerer Laser nur allgemein beschrieben wird, ohne auf Schaltungsdetails einzugehen.

Bei einem Fahrzeugscheinwerfer gemäß dem Oberbegriff des unabhängigen Anspruchs muss auf Grund der ständigen Anpassung an das geforderte Lichtbild der Strom im Lichtquellen-Zweig angepasst werden, wobei hauptsächlich im Bereich des maximalen Stroms gearbeitet wird, was zu nicht unwesentlichen Verlusten führt.

Eine Aufgabe der Erfindung liegt in der Schaffung eines Scheinwerfers, der einen durch Laserdioden erzeugten, modulierten und scannenden Laserstrahl verwendet, und bei welchem keine hohen Verluste auftreten, welche nicht nur zu einer erhöhten Wärmebelastung sondern auch zu hohen Kosten wegen der erforderlichen Dimensionierung führen. Insbesondere soll die Spannungsversorgung der Laserdiode(n), beispielsweise ein DC-DC-Wandler möglichst gleichmäßig, unabhängig von den Modulationsvorgängen belastet werden.

Die genannte Aufgabe wird mit einem Scheinwerfer gemäß Anspruch 1 gelöst.

Dank der Erfindung erfolgt eine gleichmäßigere Belastung, insbesondere der passiven Bauteile, und eine stabile Arbeitspunkteinstellung ist sichergestellt. Auch können Kosten und Bauraum durch eine geringere Dimensionierung der Ausgangskondensatoren der Stromversorgung gespart werden. Im Gegensatz zu bekannten Lösungen, siehe z.B. die AT 513 479 A1 der Anmelderin, bei welchen das Schalten bzw. Modulieren im Laserdiodenzweig mit einem Serienschalter erfolgt, in dem eine relativ hohe Verlustleistung anfällt, kann durch den Parallelstromkreis auch die Verlustleistung verringert werden.

Eine vorteilhafte, da einfache und kostengünstige Ausführung der Erfindung zeichnet sich dadurch aus, dass der Analogregler einen Operationsverstärker und einem von diesem angesteuerten Transistor aufweist.

Bei einer praxisgerechten und ökonomischen Variante ist dem Analogregler als Regelgröße ein dem Strom durch den Laserdiodenzweig proportionales Signal zugeführt.

Die Realisierung eines verkehrsbedingten Ausblendszenarios kann erleichtert werden, falls im Parallelstromkreis ein von dem abgezweigten Strom durchflossener Widerstand angeordnet ist.

Es ist weiters zweckmäßig, wenn die Stromversorgung ein DC-DC-Wandler ist.

Dabei ist es vorteilhaft, falls die Stromversorgung auf maximalen Laststrom geregelt ist.

In vielen Fällen ist es zweckmäßig, wenn die Stromversorgung ein Boost-Wandler ist.

Die Erfindung samt weiterer Vorteile ist im Folgenden an Hand beispielsweiser Ausführungen näher erläutert, die in der Zeichnung veranschaulicht sind. In dieser zeigen
Fig. 1 den prinzipiellen Aufbau eines Scheinwerfers, welcher einen scannenden, modulierten Laserstrahl verwendet,
Fig. 2 eine beispielhafte Schaltungsanordnung zur Ansteuerung eines modulierten Lasers bei einem Scheinwerfer und
Fig. 3 eine Ausbildung einer Schaltungsanordnung zur Ansteuerung eines modulierten Lasers bei einem Scheinwerfer nach der Erfindung.

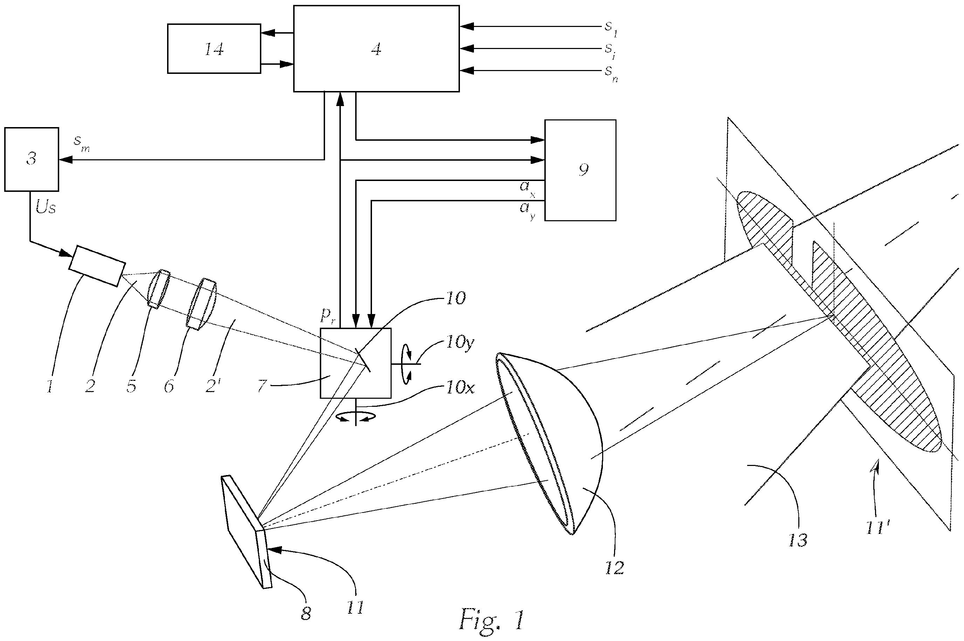

In **Fig. 1** sind die für einen erfindungsgemäßen Scheinwerfer wichtigen Teile dargestellt, wobei es klar ist, dass ein KFZ-Scheinwerfer noch viele andere Teile enthält, die seinen sinnvollen Einsatz in einem Kraftfahrzeug, wie insbesondere einem PKW oder Motorrad, ermöglichen. Lichttechnischer Ausgangspunkt des Scheinwerfers ist eine Laserlichtquelle 1, die einen Laserstrahl 2 abgibt, und welcher eine Laseransteuerung 3 zugeordnet ist, wobei diese Ansteuerung 3 zur Stromversorgung sowie zur Überwachung der Laseremission oder z. B. zur Temperaturkontrolle dient und auch zum Modulieren der Intensität des abgestrahlten Laserstrahls eingerichtet ist. Unter "Modulieren" wird in Zusammenhang mit der vorliegenden Erfindung verstanden, dass die Intensität der Laserlichtquelle geändert werden kann, sei es kontinuierlich oder gepulst, im Sinne eines Ein- und Ausschaltens. Wesentlich ist, dass die Lichtleistung analog dynamisch geändert werden kann, je nachdem, an welcher Winkelposition ein später näher beschriebener Spiegel steht. Zusätzlich gibt es noch die Möglichkeit des Ein- und Ausschaltens für eine gewisse Zeit, um definierte Stellen nicht zu beleuchten oder auszublenden. Ein Beispiel eines dynamischen Ansteuerungskonzepts zur Erzeugung eines Bildes durch einen scannenden Laserstrahl ist etwa in dem Dokument A 514633 der Anmelderin beschrieben.

Die Laserlichtquelle enthält in der Praxis oft mehrere Laserdioden, beispielsweise sechs von z. B. je 1 Watt, um die gewünschte Leistung bzw. den geforderten Lichtstrom zu erreichen.

Das Ansteuersignal der Laserlichtquelle 1 ist mit Us bezeichnet.

Die Laseransteuerung 3 erhält ihrerseits wiederum Signale von einer zentralen Recheneinheit 4, welcher Sensorsignale s₁ ... sᵢ ... sₙ zugeführt werden können. Diese Signale, für welche in Fig. 1 stellvertretend ein Modulationssignal s_{M} eingezeichnet ist, können beispielsweise Schaltbefehle zum Umschalten von Fernlicht auf Abblendlicht sein oder Signale, die beispielsweise von Sensoren S₁...Sₙ, wie Kameras, aufgenommen werden, welche die Beleuchtungsverhältnisse, Umweltbedingungen und/oder Objekte auf der Fahrbahn erfassen. Auch können die Signale von einer Fahrzeug-Fahrzeug-Kommunikationsinformation stammen. Die hier schematisch als Block gezeichnete Recheneinheit 4 kann vollständig oder teilweise in dem Scheinwerfer enthalten sein und dient insbesondere auch zur Durchführung des weiter unten beschriebenen Verfahrens der Erfindung.

Die Laserlichtquelle 1 gibt beispielsweise blaues oder UV-Licht ab, wobei der Laserlichtquelle eine Kollimatoroptik 5 sowie eine Fokussieroptik 6 nachgeordnet ist. Die Ausbildung der Optik hängt unter anderem von der Art, Anzahl und der räumlichen Platzierung der verwendeten Laserdioden, von der erforderlichen Strahlqualität und von der gewünschten Laserspotgröße am Lichtkonversionsmittel ab.

Der fokussierte bzw. geformte Laserstrahl 2' gelangt zu einem Lichtscanner 7 und wird von einem Mikrospiegel 10 auf ein im vorliegenden Beispiel als Leuchtfläche ausgebildetes Lichtkonversionsmittel 8 reflektiert, welches z.B. in bekannter Weise einen Phosphor zur Lichtkonversion aufweist. Der Phosphor wandelt beispielsweise blaues oder UV-Licht in "weißes" Licht um. Unter "Phosphor" wird in Zusammenhang mit der vorliegenden Erfindung ganz allgemein ein Stoff oder eine Stoffmischung verstanden, welche Licht einer Wellenlänge in Licht einer anderen Wellenlänge oder eines Wellenlängengemisches, insbesondere in "weißes" Licht, umwandelt, was unter dem Begriff "Wellenlängenkonversion" subsumierbar ist.

Man verwendet Lumineszenz-Farbstoffe, wobei die Ausgangswellenlänge im Allgemeinen kürzer und damit energiereicher als das emittierte Wellenlängengemisch ist. Der gewünschte Weißlichteindruck entsteht dabei durch additive Farbmischung. Dabei wird unter "weißes Licht" Licht einer solchen Spektralzusammensetzung verstanden, welches beim Menschen den Farbeindruck "weiß" hervorruft. Der Begriff "Licht" ist natürlich nicht auf für das menschliche Auge sichtbare Strahlung eingeschränkt.

Angemerkt sei an dieser Stelle, dass in der Zeichnung das Lichtkonversionsmittel als Phosphorfläche gezeigt ist, auf welcher der scannende Laserstrahl bzw. scannende Laserstrahlen ein Bild erzeugen, das von dieser Seite des Phosphors ausgehend projiziert wird. Es ist jedoch auch möglich, einen durchscheinenden Phosphor zu verwenden, bei welchem der Laserstrahl, von der der Projektionslinse abgewandten Seite kommend, ein Bild erzeugt, wobei sich jedoch die Abstrahlseite auf der der Projektionslinse zugewandten Seite des Lichtkonversionsmittels befindet. Es sind somit sowohl reflektierende als auch transmissive Strahlengänge möglich, wobei letztlich auch eine Mischung von reflektierenden und transmissiven Strahlengängen nicht ausgeschlossen ist.

Der im vorliegenden Beispiel um zwei Achsen schwingende Mikrospiegel 10 wird von einer Spiegelansteuerung 9 mit Hilfe von Treibersignalen aₓ, a_{y} angesteuert und z.B. in zwei zueinander orthogonalen Richtungen x, y abgelenkt. Auch die Spiegelansteuerung 9 wird von der Recheneinheit 4 gesteuert, um die Schwingungsamplituden des Mikrospiegels 10 sowie dessen momentane Winkelgeschwindigkeit einstellen zu können, wobei auch asymmetrisches Schwingen um die jeweilige Achse einstellbar sein kann. Die Ansteuerung von Mikrospiegeln ist bekannt und kann auf vielerlei Art erfolgen, z.B. elektrostatisch, elektromagnetisch oder elektrodynamisch. Die Position des Mikrospiegels 10 wird zweckmäßigerweise mit Hilfe eines Positionssignals pᵣ an die Spiegelansteuerung 9 und/oder an die Recheneinheit 4 rückgemeldet. Es sei angemerkt, dass auch andere Strahlablenkmittel, wie z.B. bewegbare Prismen, Verwendung finden können, wenngleich die Verwendung eines Mikrospiegels bevorzugt wird. Der Laserstrahl 2' scannt somit über das Lichtkonversionsmittel 8, das im Allgemeinen eben ist, jedoch nicht eben sein muss, und erzeugt ein Leuchtbild 11 mit einer vorgegebenen Lichtverteilung. Dieses Leuchtbild 11 wird nun mit einem Abbildungssystem 12 als Lichtbild 11' auf die Fahrbahn 13 projiziert. Dabei wird die Laserlichtquelle mit hoher Frequenz gepulst oder kontinuierlich angesteuert, sodass entsprechend der Position des Mikrospiegels beliebige Lichtverteilungen nicht nur einstellbar sind - beispielsweise Fernlicht/ Abblendlicht - sondern auch rasch änderbar sind, wenn dies eine besondere Gelände- oder Fahrbahnsituation erfordert, beispielsweise wenn Fußgänger oder entgegenkommende Fahrzeuge durch einen oder mehrere der Sensoren S₁...Sₙ erfasst werden und dementsprechend eine Änderung der Geometrie und/oder Intensität des Lichtbildes 11' der Fahrbahnausleuchtung erwünscht ist. Das Abbildungssystem 12 ist hier vereinfacht als Linse dargestellt.

Der Begriff "Fahrbahn" wird hier zur vereinfachten Darstellung verwendet, denn selbstverständlich hängt es von den örtlichen Gegebenheiten ab, ob sich das Lichtbild 11' tatsächlich auf der Fahrbahn befindet oder auch darüber hinaus erstreckt. Prinzipiell entspricht das Bild 11' einer Projektion auf eine vertikale Fläche entsprechend der einschlägigen Normen, die sich auf die KFZ-Beleuchtungstechnik beziehen.

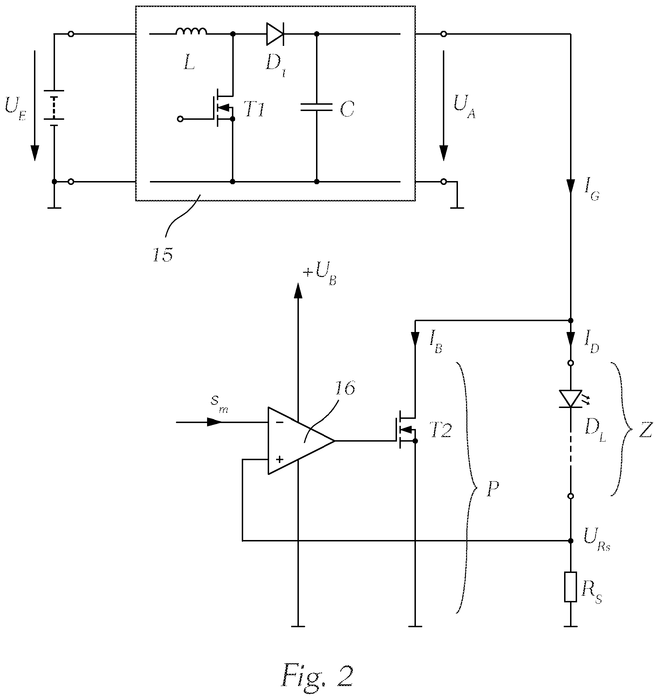

Die in Fig. 2 gezeigte Schaltungsanordnung für eine Beleuchtungseinrichtung bzw. einen Scheinwerfer beschreibt im Wesentlichen den Aufbau der in Fig. 1 enthaltenen Laseransteuerung 3 und zeigt eine Spannungsquelle U_{E}, bei welcher es sich beispielsweise um den Akkumulator eines Kraftfahrzeuges handelt, wobei im vorliegenden Fall dieser Spannungsquelle U_{E} ein Hochsetzsteller 15 nachgeordnet ist, in welchem nur schematisch eine Drossel L, ein Schalttransistor T1, eine Gleichrichterdiode D1 und ein Kondensator C gezeigt sind. Dieser Hochsetzsteller liefert eine Ausgangsspannung U_{A}, welche über einen Sensorwiderstand Rs einen Zweig Z mit zumindest einer Laserdiode D_{L} versorgt. Es sollte klar sein, dass weder das Vorhandensein eines Hochsetzstellers (oder Tiefsetzstellers) erforderlich ist und dass der Laserdioden-Zweig Z eine an die Versorgungsspannung angepasste Anzahl von Laserdioden, im einfachsten Fall eine einzige Laserdiode, enthält.

Es ist nun parallel zu dem Laserdiodenzweig Z ein gesteuerter bzw. geregelter Parallelstromkreis angeordnet, der als analoger, vorzugsweise linearer Stromregler ausgebildet ist und im vorliegenden Fall einen parallel zu dem Zweig Z liegenden Transistor T2, z.B. einen FET, aufweist, in Serie mit dem Laserdiodenzweig Z liegt ein Regelwiderstand R_{S}. Von dem gesamten, von der Stromversorgung, hier dem Hochsetzsteller 15, gelieferten Strom I_{G} fließt ein Teil durch den Laserdiodenzweig Z als Strom I_{D} und ein Teil über den Parallelzweig als Strom I_{B}, hier über den Transistor T2. Der Transistor T2 wird von einem Operationsverstärker 16 angesteuert, dem folgende Größen zugeführt werden: Einerseits als Regelgröße U_{RS}, eine dem Strom I_{D} im Laserdiodenzweig Z proportionale, an dem Widerstand Rs auftretende Spannung U_{RS} und andererseits das Modulationssignal s_{M}.

Die Stromversorgung 15, hier der Hochsetzsteller, regelt auf den Maximalstrom, wobei im Volllastbetrieb, d.h. bei Maximalstrom, an dem Analogregler, nämlich an T2, im Wesentlichen keine Verlustleistung anfällt. Bei einem hochfrequenten Modulieren des Stromes der Laserdiode(n) D_{L} wird über den Parallelstromkreis des Analogreglers über den Transistor T2 ein Strom I_{B} abgezweigt, sodass der Ausgangsstrom I_{G} der Stromversorgung konstant bleibt und eine gleichmäßige Belastung der Stromversorgung 15, hier des Hochsetzstellers, sichergestellt ist.

Unter Modulieren ist jede Beeinflussung des Stroms durch die Laserdiode D_{L} (oder Laserdioden), auch ein sogenanntes "Dimmen", zu verstehen, welche notwendig ist, um im Lichtbild die geforderten optischen Leistungen an den jeweiligen Stellen zu erbringen bzw. um ein z.B. verkehrsbedingtes Ausblendszenario realisieren zu können, das in Hinblick auf die Geschwindigkeit der Modulation wesentlich kritischer ist.

Ein bereits oben genanntes Problem liegt in dem Wunsch nach möglichst gleichmäßiger Belastung der Stromversorgung, unabhängig von dem jeweiligen, dem Modulationssignal entsprechenden Strombedarf der Laserdiode(n). Nach dem Stand der Technik wird daher oft ein Kondensator C am Ausgang eines Wandlers mit hoher Kapazität verwendet, was zu einem entsprechenden Aufwand an Bauraum und Kosten führt.

Das Beispiel begegnet nun diesem Problem durch das Parallelschalten des Analogreglers 16, T2, welcher einen abgezweigten Strom I_{B} des Gesamtstroms I_{G} aufnimmt, und zwar "analog", im Gegensatz zu bekannten Lösungen mit elektronischen Schaltern im Parallelzeig, welche durch eine PWM die Helligkeit der Laserdiode bestimmen. Im Maximalstrombetrieb fließt kein abgezweigter Strom I_{B}, sodass im Parallelzweig keine Verlustleistung entsteht. Dies wäre sehr wohl der Fall, läge die Linearstufe bzw. der Analogregler in Serie mit dem Laserdiodenzweig Z.

Sobald eine Modulation (Dimmen) der Laserdiode(n) D_{L} im Sinne einer Verringerung des Stromes durch die Laserdiode(n) aufgrund einer gewünschten Lichtleistung im Leuchtbild bzw. im Lichtbild 11' oder wegen eines Ausblendszenarios erforderlich ist, wird das Modulationssignal s_{M}, das auch als Referenzsignal für den Operationsverstärker 16 bezeichnet werden kann, entsprechend verändert. Die am Eingang des Operationsverstärkers 16 auftretende Differenzspannung führt zu einem Ansteuern des Transistors T2 im Sinne einer Erhöhung des Stromes I_{B} was weiters zu einer Verringerung des Stromes I_{D} durch die Laserdiode(n) führt. Da die Reduktion des Diodenstroms eine Verringerung der Spannung U_{RS} an dem Widerstand Rs verursacht, die dem zweiten Eingang des Operationsverstärkers 16 zugeführt wird, geht die Differenzspannung am Eingang des Operationsverstärkers im Sinne der erwünschten Regelung gegen Null.

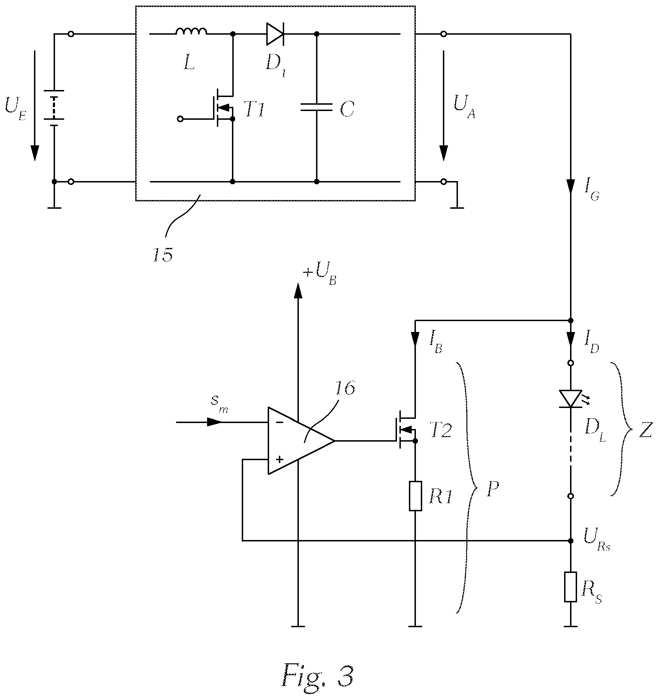

In Fig. 3 ist eine Ausführungsform gemäß der Erfindung ersichtlich, welche besondere Vorteile zeigt, falls verkehrsbedingte Ausblendszenarien eine Rolle spielen. Bei solchen Ausblendszenarien wird eine Beleuchtungsstärke von weniger als 1 lx im auszublendenden Bereich gefordert und in bevorzugter Weise sollte bei Verwendung eines Lichtscanners im auszublendenden Bereich die Laserlichtquelle komplett ausgeschaltet werden oder deren Emission zumindest soweit verringert werden, dass es zu keiner Anregung des Lichtkonversionsmittels kommt und somit der entsprechende Bereich im Lichtbild vollständig abgedunkelt erscheint.

In diesem Fall stellt sich jedoch das Problem, dass ein komplettes "Ausschalten" der Laserlichtquelle deren vollständiges Überbrücken bedeuten würde, was also im Wesentlichen einem Kurzschließen gleichkäme. Um sowohl eine solche Belastung für die Beschaltung zu vermeiden als auch eine Sicherung für einen Fehlerfall im Parallelstromkreis zu gewährleisten, kann in vorteilhafter Weise ein von dem abgezweigten Strom I_{B} durchflossener Widerstand R1 in diesem Parallelstromkreis angeordnet werden, welcher im Falle eines Kurzschließens bzw. eines kompletten "Ausschaltens" der Laserlichtquelle 1 die Ausgangsspannung des Hochsetzstellers 15 auf einem durch diesen Widerstand R1 definierten Wert hält.

Der Wert des Widerstandes R1 wird bevorzugt so gewählt, dass im Falle eines geschlossenen Transistors T2 der Strom I_{D} bis auf jenen Wert verringert wird, bei dem die von der Laserlichtquelle 1 emittierte Lichtleistung nicht mehr ausreicht, um das Lichtkonversionsmittel 8 anzuregen und es infolge dessen zu einer gezielten Ausblendung im Lichtbild 11' kommt.

Insbesondere wird der Widerstandswert von R1 so gewählt, dass die Laserversorgungsspannung im Falle eines geschlossenen Transistors T2 unter eine für eine Laserdiode typische Schwellspannung sinkt, was ein Ausblenden sicherstellt. Im Falle der Serienschaltung mehrere Laserdioden ist diese Spannung natürlich entsprechend vervielfacht.

Den Frequenzgang beeinflussende, dem Fachmann wohl bekannte Bauteile, die je nach den Anforderung eingesetzt werden, sind in der schematischen Darstellungen der Fig. 1 und 2 weggelassen.

## Patentansprüche

1. Fahrzeugscheinwerfer aufweisend,
eine Laserlichtquelle (1) mit zumindest einem Laserdiodenzweig (Z) mit zumindest einer modulierten Laserdiode (D_{L}),
einen Lichtscanner (7) und ein Lichtkonversionsmittel (8), wobei der Laserstrahl (2) der zumindest einen Laserdiode mittels des Lichtscanners scannend auf das Lichtkonversionsmittel (8) lenkbar ist, um an diesem ein Leuchtbild (11) zu erzeugen,
ein Abbildungssystem (12), über welches das Leuchtbild als Lichtbild (11') auf die Fahrbahn (13) projizierbar ist, sowie mit einer Laserdiodenansteuerung (3) und einer der Laserdiodenansteuerung zugeordneten Recheneinheit (4),
wobei der Recheneinheit Sensorsignale (s1...sn) zur Änderung der Intensität des Lichtbilds zuführbar sind, wobei der Laserdiodenansteuerung (3) ein Modulationssignal (sₘ) von der Recheneinheit (4) zugeführt ist, und wobei die Laserdiodenansteuerung eine geregelte Stromversorgung (15) zur Stromversorgung des Laserdiodenzweigs (Z) aufweist,
**dadurch gekennzeichnet, dass**
die Laserdiodenansteuerung (3) des Weiteren aufweist
einen Regelwiderstand (Rₛ), welcher in Serie zu dem Laserdiodenzweig (Z) geschaltet ist,
einen geregelten Parallelstromkreis (P), aufweisend einen Transistor (T2) und einem zum Transistor (T2) in Serie geschalteten Widerstand (R1), wobei der Parallelstromkreis (P) parallel zu dem Laserdiodenzweig (Z) und dem Regelwiderstand (Rs) geschaltet ist,
einen Operationsverstärker (16), welcher den Transistor (T2) ansteuert, wobei dem Operationsverstärker (16) als Regelgröße eine Spannung an dem Regelwiderstand (Rs) sowie das Modulationssignal (Sm) zugeführt wird.

2. Fahrzeugscheinwerfer nach Anspruch 1, **dadurch gekennzeichnet, dass** wobei die Spannung am Regelwiderstand einem dem Strom durch den Laserdiodenzweig proportionalen Signal entspricht.

3. Fahrzeugscheinwerfer nach einem der Ansprüche 1 bis 3, **dadurch gekennzeichnet, dass** die geregelte Stromversorgung ein DC-DC-Wandler (15) ist.

4. Fahrzeugscheinwerfer nach Anspruch 3, **dadurch gekennzeichnet, dass** die geregelte Stromversorgung (15) auf einen Maximalstrom regelt.

5. Fahrzeugscheinwerfer nach Anspruch 4, **dadurch gekennzeichnet, dass** die geregelte Stromversorgung ein Boost-Wandler ist.

## Claims

1. Vehicle headlamp comprising, a laser light source (1) having at least one laser diode branch (Z) with at least one modulated laser diode (DL), a light scanner (7) and a light conversion means (8), wherein the laser beam (2) of the at least one laser diode can be directed by means of the light scanner in a scanning manner onto the light conversion means (8) in order to produce a luminous image (11) thereon an imaging system (12), by means of which the luminous image can be projected as a light image (11') onto the roadway (13), and having a laser diode drive (3) and a computing unit (4) assigned to the laser diode drive, wherein sensor signals (s1... sn) for changing the intensity of the light image can be fed to the computing unit, wherein a modulation signal (sm) from the computing unit (4) can be fed to the laser diode (4) is supplied to the laser diode control (3), and the laser diode control having a regulated power supply (15) for supplying power to the laser diode branch (Z), **characterized in that** the laser diode drive (3) further comprises a regulating resistor (Rs) connected in series with the laser diode branch (Z), a regulated parallel circuit (P) comprising a transistor (T2) and a resistor (R1) connected in series with the transistor (T2),wherein the parallel circuit (P) is connected in parallel with the laser diode branch (Z) and the regulating resistor (Rs), an operational amplifier (16) which drives the transistor (T2), a voltage at the variable resistor (Rs) and the modulation signal (Sm) being fed to the operational amplifier (16) as a controlled variable.

2. Vehicle headlamp according to claim 1, **characterized in that** the voltage at the regulating resistor corresponds to a signal proportional to the current through the laser diode branch.

3. Vehicle headlamp according to any one of claims 1 to 3, **characterized in that** the regulated power supply is a DC-DC converter (15).

4. Vehicle headlamp according to claim 3, **characterized in that** the regulated power supply regulates to a maximum current.

5. Vehicle headlamp according to claim 4, **characterized in that** the regulated power supply is a boost converter.

## Revendications

1. Projecteur de véhicule comprenant, une source de lumière laser (1) ayant au moins une branche de diode laser (Z) avec au moins une modulation de l'intensité lumineuse, diode laser (DL), un scanner de lumière (7) et un moyen de conversion de lumière (8), dans lequel le faisceau laser (2) de la au moins une diode laser peut être dirigé au moyen du scanner de lumière à la manière d'un balayage sur le moyen de conversion de lumière (8) afin de produire une image lumineuse (11) sur celui-ci un système d'imagerie (12), au moyen duquel l'image lumineuse peut être projetée sous la forme d'une image lumineuse (11') sur la chaussée (13), et comportant un entraînement à diode laser (3) et une unité de calcul (4) associée à l'entraînement à diode laser dans lequel des signaux de capteur (sl...sn) destinés à modifier l'intensité de l'image lumineuse peuvent être transmis à l'unité de calcul, dans lequel un signal de modulation (sm) provenant de l'unité de calcul (4) est transmis à la commande à diode laser (3), et dans lequel la commande à diode laser présente une alimentation régulée (15) destinée à alimenter la branche de diode laser (Z) la commande à diode laser (3) étant alimentée par un signal de modulation (sm) provenant de l'unité arithmétique (4), et la commande à diode laser comprenant une alimentation régulée (15) pour fournir de l'énergie à la branche de diode laser (Z), **caractérisé en ce que** la commande à diode laser (3) comprend en outre une résistance de régulation (Rs) connectée en série avec la branche de diode laser (Z), un circuit parallèle régulé (P) comprenant un transistor (T2) et une résistance (R1) montée en série avec le transistor (T2), le circuit parallèle (P) étant monté en parallèle avec la branche de diode laser (Z) et la résistance de régulation (Rs), un amplificateur opérationnel (16) qui commande le transistor (T2), une tension à la résistance de régulation (Rs) et le signal de modulation (Sm) étant amenés à l'amplificateur opérationnel (16) en tant que variable commandée.

2. Projecteur de véhicule selon la revendication 1, **caractérisé en ce que** la tension au niveau de la résistance de régulation correspond à un signal proportionnel au courant traversant la branche de la diode laser.

3. Projecteur de véhicule selon l'une quelconque des revendications 1 à 3, **caractérisé en ce que** l'alimentation régulée est un convertisseur DC-DC (15).

4. Projecteur de véhicule selon la revendication 3, **caractérisé en ce que** l'alimentation régulée se régule à un courant maximum.

5. Projecteur de véhicule selon la revendication 4, **caractérisé en ce que** l'alimentation régulée est un convertisseur élévateur.
